# EUROPEAN PATENT SPECIFICATION

(11) **EP 0 821 869 B1**
(45) Date of publication and mention of the grant of the patent: **23.01.2002**
(21) Application number: 97305825.8
(22) Date of filing: 01.08.1997
(51) Int. Cl.: A01D 34/71

(54) **Lawnmower**
Rasenmäher
Tondeuse à gazon

(30) Priority: 01.08.1996 GB 9616149
(43) Date of publication of application: 04.02.1998
(73) Proprietor: ELECTROLUX OUTDOOR PRODUCTS LIMITED, Newton Aycliffe, Co Durham DL5 6UP (GB)
(72) Inventor: Lawson, Ian, Newton Acyliffe, Co. Durham DL5 4RT (GB); Park, Keith, Ellerton, York YO4 4NX (GB)
(74) Representative: Wright, Howard Hugh Burnby

(56) References cited:
- EP-A- 0 457 433
- EP-A- 0 501 674
- EP-A- 0 542 459
- EP-A- 0 579 386
- FR-A- 2 656 766
- GB-A- 2 242 813
- GB-A- 2 267 809
- GB-A- 2 272 144
- US-A- 5 361 568

## Description

This invention relates to a lawnmower, and in particular to a so-called "rotary lawnmower" which includes a deck defining a cutting chamber, a cutter blade rotatable within the cutting chamber about a substantially vertical axis, and a grass collection receptacle within which cut grass is collected.

EP-579 386A discloses two rotary lawnmowers, one of which is a hover-type lawnmower, and the other of which is a wheeled-type lawnmower. Each lawnmower includes a deck which defines a cutting chamber within which a cutter blade rotates, the deck including access means in the form of an aperture or duct which leads cut grass to a receptacle within which it is collected. A fan blows air through the cutting chamber and the access means into the receptacle, and sucks air from the receptacle for recirculation.

While these lawnmowers are extremely effective, it is often necessary to direct the air and cut grass around a curve or bend in order to take it from the cutting chamber to the receptacle. This is of particular concern where the receptacle is located above the deck, since the air and cut grass must pass through a longer and tighter curve than if the receptacle is located outwardly of (for example, behind) the deck. Where the receptacle is above the deck, the cut grass is very difficult to re-direct, since it tends to drop out of a curved stream of air and clog the mower.

GB 2272144 discloses a grass collection and compaction device in which grass cuttings which are cut by a lawnmower are dropped on the ground and subsequently entrained in and picked up by air being sucked into a grass box. The inlet to the grass box is arranged behind the lawnmower and very close to the ground. A screen is located across the top of the grass box through which the air passes on its way to a fan, and so grass cuttings are retained within the box. A secondary air inlet adjacent to the screen directs air across the surface of the screen in order to keep it clear of grass cuttings.

EP 0501674 also collects grass which has been dropped by the cutting system of a lawnmower. In this instance, collection is effected by creating an induced air flow from atmosphere into a collection duct. This is done by directing air under pressure downstream through the duct. The induced air flow is sufficient to entrain grass clippings which have been left on the ground behind the lawnmower.

A lawnmower according to the present invention comprises:
a deck defining a cutting chamber, the deck including an aperture for passage of cut grass from the cutting chamber;
a cutter blade rotatable within the cutting chamber about a substantially vertical axis;
a grass collection receptacle including a first air-permeable region, and a first inlet for entry of the cut grass from the cutting chamber; and
an air moving device for drawing air from the grass collection receptacle via the first air-permeable region, and for directing the so-drawn air into the cutting chamber, the resultant first air flow serving to entrain cut grass within the cutting chamber and to convey said entrained grass into the grass collection receptacle via the aperture and the first inlet;
characterised by a second air inlet, which is disposed in the region of the first inlet, for entry of a second stream of air into the receptacle, the second stream of air serving to complement the first air flow through the receptacle and to assist in deflecting the cut grass entrained in the first air stream into the interior of the receptacle.

Since cut grass is collected while still in the cutting chamber, and thus still airborne, the collection is relatively easy.

This lawnmower has the advantage that cut grass will be carried into the interior of the receptacle with less grass falling out of the first air flow as it enters the receptacle. Thus, the first inlet is much less likely to become clogged by the collected grass.

The second air inlet may be located either in the receptacle, or in a passage between the aperture and the first inlet. In either case, the second stream of air assists in deflecting the cut grass and reduces the incidence of clogging.

Advantageously, the second air inlet is configured so as to form a curtain or wall of air, and this is further enhanced where the receptacle includes an air-impermeable wall in front of which the cushion or wall of air is formed. The curtain of air reduces the likelihood that cut grass will leave the first air flow and hit the wall. The impermeable nature of the wall acts to retain the curtain of air within the receptacle.

The second stream of air may be pumped by a fan, or may be induced by the first air flow.

A third inlet disposed towards the top of the receptacle may be included for supplying a third air flow which assists the first air flow during the filling of the final ten or fifteen percent of the receptacle with grass.

In a preferred embodiment, the lawnmower further comprises wheels for supporting the deck above the ground. Preferably, there are four wheels positioned respectively at the four "corners" of the deck, and the receptacle is positioned above the deck substantially within the footprint of the wheels. This has the advantage of positioning the receptacle above the centre of gravity of the mower, thereby minimising the risk of the mower tilting if grass collects unevenly within the receptacle. Moreover, the lawnmower is easier to manoeuvre.

The invention will now be described in greater detail, by way of example, with reference to the drawings, in which:
Figure 1 is a cross-sectional side view of a first form of lawnmower constructed in accordance with the invention;
Figure 2 is a cross-sectional plan view of the lawnmower of Figure 1;
Figure 3 is a cutaway perspective view of a basket which forms part of the grass collection receptacle of the lawnmower shown in Figure 1;
Figure 4 is a cross-sectional side view of a second form of lawnmower constructed in accordance with the invention;
Figure 5 is a cross-sectional plan view of the lawnmower of Figure 4;
Figure 6 is a cross-sectional side view of a third form of lawnmower constructed in accordance with the invention;
Figure 7 is a cross-sectional plan view of the lawnmower of Figure 6;
Figure 8 is a cross-sectional side view of a fourth form of lawnmower constructed in accordance with the invention, this form being a modification of the lawnmower of Figure 1;
Figure 9 is a sectional side-view of part of a fifth form of lawnmower constructed in accordance with the invention;
Figure 10 is a side view of a sixth form of lawnmower constructed in accordance with the invention; and
Figure 11 is a side view of a seventh form of lawnmower.

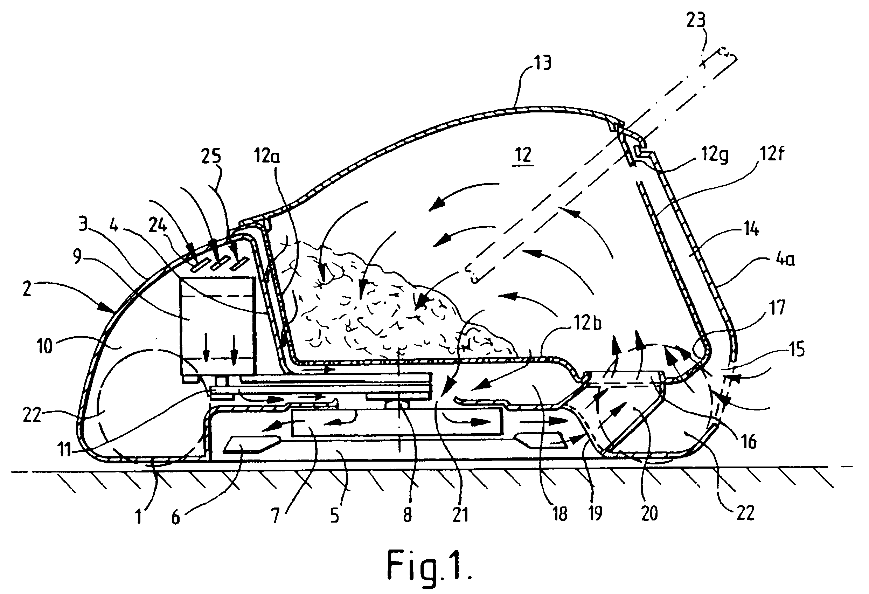

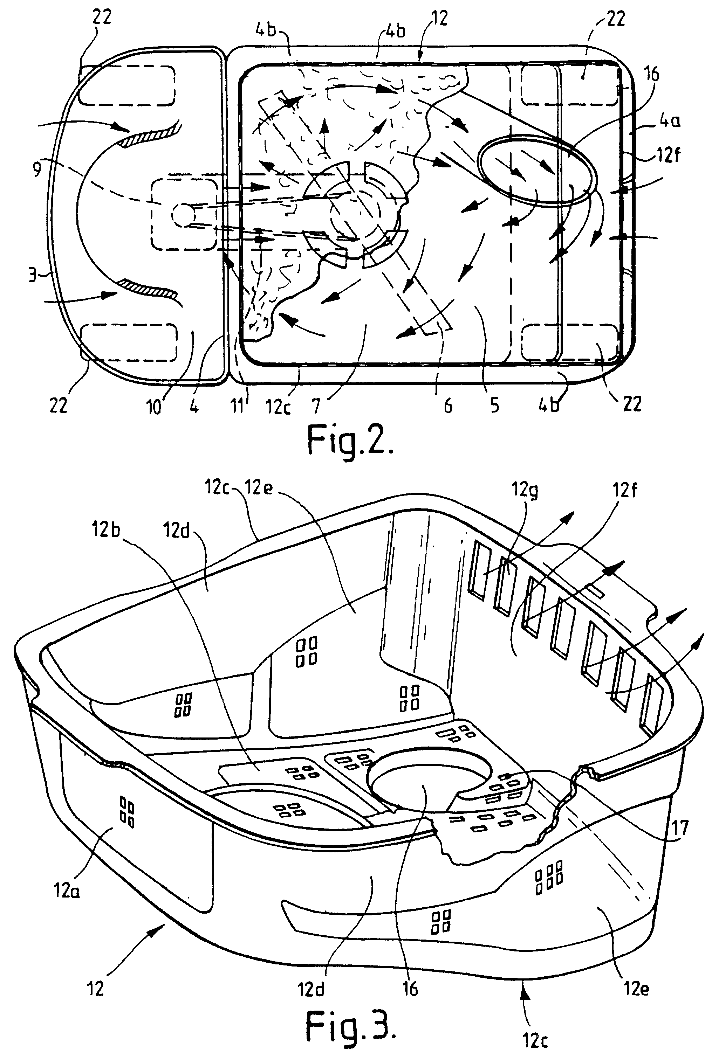

Referring to the drawings, Figures 1 and 2 show a lawnmower having a base or deck 1, and a housing 2 mounted above the deck, the housing having a curved front surface 3. The housing 2 defines a large internal cavity bounded by a front wall 4 (which depends from the curved front surface 3), a rear wall 4a, and side walls 4b (see Figure 2). The deck 1 is shaped like an inverted dish, so as to define a cutting chamber 5 within which a cutter blade 6 and an impeller 7 are mounted on a common drive shaft 8 for rotation about a vertical axis. A motor 9 is mounted within a motor chamber 10 defined by the curved front surface 3 of the housing 2 and the front wall 4 of the internal cavity, the motor chamber being located in the "nose" of the lawnmower, that is to say at the front when considered in the normal direction of operation of the lawnmower. The axis of rotation of the output shaft of the motor 9 is off-set from the axis of rotation of the drive shaft, and so a drive belt 11 connects them together. A grass collection receptacle 12 is supported above the deck 1 within the large internal cavity.

As shown in Figure 3, the grass collection receptacle 12 is an open-topped box or basket having air-permeable walls. The receptacle 12 includes an air-permeable front wall 12a, an air-permeable base wall 12b, and side walls 12c. The side walls 12c include air-impermeable regions 12d and air-permeable regions 12e. A rear wall 12f of the receptacle 12 is mainly air-impermeable, but includes an air-permeable region 12g at the top. The top of the receptacle 12, when inserted into the cavity of the housing 2, is closed by an air-impermeable lid 13.

The rear wall 12f of the receptacle 12 is spaced apart from the rear wall 4a of the housing to define an air-inlet chamber 14 therebetween. The rear wall 4a of the housing 2 includes an inlet port 15 for ingress of ambient air to the air-inlet chamber 14. The base wall 12b of the receptacle 12 also includes a first inlet 16 through which cut grass enters, and a second inlet 17 in the region of the first inlet 16. The second inlet 17 communicates directly with the inlet port 15. The air-permeable region 12g at the top of the rear wall 12f of the receptacle 12 constitutes a third air inlet.

The front, base and side walls 12a, 12b and 12c of the receptacle 12 are spaced from the adjacent walls of the internal cavity of the housing 2 to define a plenum chamber 18 therebetween.

The deck 1 includes a first aperture 19 which opens into a passage 20 which leads into the grass collection receptacle 12 via the first inlet 16; and a second aperture 21 which connects the plenum chamber 18 to the centre of the cutting chamber 5 to feed the impeller 7 with air.

The housing 2 is supported above the ground by four ground wheels 22. The receptacle 12 is located entirely between the front and rear ground wheels 22 so that the weight of the collected grass is centrally located in order to maintain stability. The mower is controlled by a user who grasps a handle 23 which is attached to the housing 2.

The curved front surface 3 defining the top of the motor chamber 10 is formed with a series of air-inlet slots 24, through which slots air is drawn, as indicated by the arrows 25, to cool the motor 9, as is described below.

In operation, the motor 9 drives the cutter blade 6 and the impeller 7 via the drive belt 11. The impeller 7 draws air into the cutting chamber 5 via the second aperture 21. This air comes partly from atmosphere, via the motor chamber 10 and the air-inlet slots 24, but mainly from the receptacle 12 via the air-permeable front, base and side walls 12a, 12b and 12c. The impeller 7 blows this air through the first aperture 19, the passage 20 and the first inlet 16 into the grass collection receptacle 12. This flow of air is the first air flow. Thus, the impeller 7 generates a re-circulating flow of air. The cutter blade 6 rotates and, as the lawnmower advances, cuts grass. The cut grass is transported around the cutting chamber 5, being entrained by an air flow generated by the cutter blade tips, and by the air flow generated by the impeller 7.

The air in the receptacle 12 is sucked into the plenum chamber 18 via the air-permeable walls 12a, 12b and 12c of the receptacle, the suction being generated by the impeller 7. The pressure within the receptacle 12 is thus lower than ambient pressure. A second stream of ambient air is, therefore, drawn into the receptacle 12 through the inlet port 5 and the second inlet 17. This second stream of ambient air forms a wall or curtain of air in front of the rear wall 12f of the receptacle 12. Although the first air flow within the receptacle 12 carries the cut grass into the interior of the receptacle, a proportion of the cut grass tends to drop out of the first air flow and gather against the rear wall 12f. Such gathered cut grass could fall back towards the first inlet 16 and cause clogging. However, the second air prevents that from happening by sweeping upwards any cut grass which drops out of the first air flow. The second stream of air also increases the air flow through the receptacle 12, assisting in the compaction of cut grass against its air-permeable front, base and side walls 12a, 12b and 12c as it passes through the collected grass

In addition, the relatively low pressure within the receptacle 12 induces a third air flow into the receptacle through the third air inlet 12g. The third airflow comes from atmosphere via the inlet port 15 and the air inlet chamber 14. The third flow of air also increases the airflow through the receptacle 12.

When the grass collection receptacle 12 is nearly full, normally in the last ten or fifteen percent of a fill, the air-permeable front, base and side walls 12a, 12b and 12c of the receptacle become restricted by collected grass, thereby reducing the rate at which the impeller 7 draws air from the receptacle. However, the suction which does take place draws air into the receptacle 12, not only from the passage 20, but also from atmosphere via the third inlet 12g.

The third airflow boosts the air flow within the receptacle 12, thereby assisting in carrying the cut grass away from the first inlet 16 towards the interior of the receptacle 12, thereby reducing the likelihood of clogging.

During operation, the impeller 7 draws cooling air 25 into the motor chamber 10 via the slots 24. This cooling air 25 passes over the motor 9, and into the plenum chamber 18. Cooling air is, therefore, drawn over the motor 9 as a result of the low pressure in the plenum chamber 18 caused by the impeller 7.

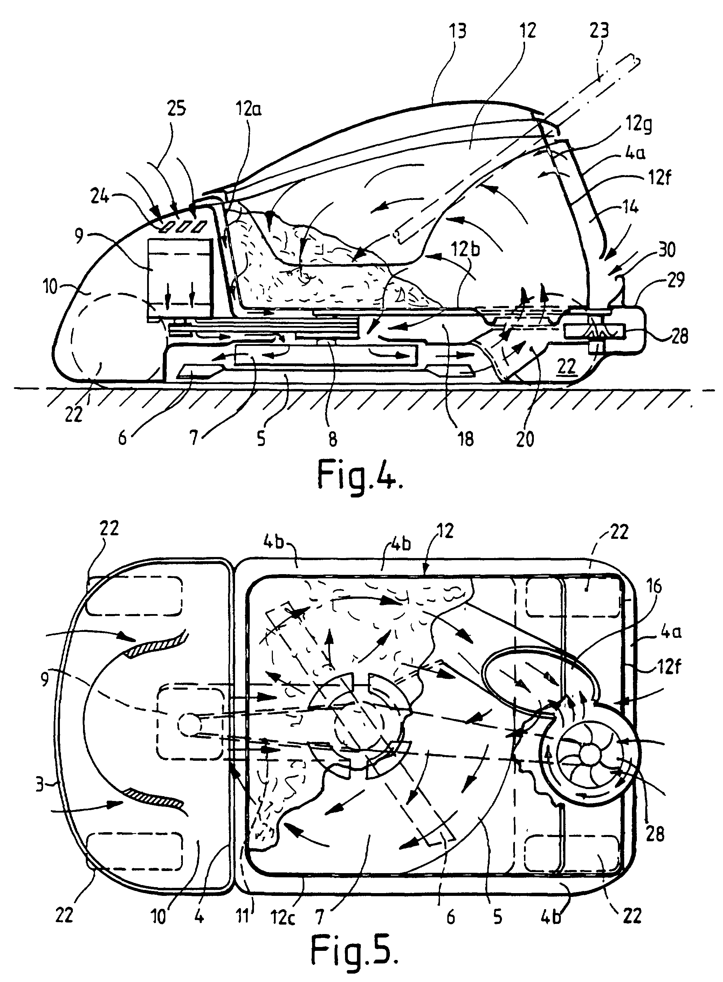

Figures 4 and 5 show a second form of lawnmower. This lawnmower is similar to that shown in Figures 1 and 2, so like reference numerals are used for like parts, and only the modifications are described below.

In this second form, instead of relying on ambient air, the second airflow is generated by a second fan 28 located in a second fan casing 29. In this case, however, the second air inlet 17 is constituted by a short passage joining the outlet of the fan 28 and the passage 20. As before, the rear wall 4a of the housing 2 is spaced away from the rear wall 12f of the receptacle 12, and includes an inlet port 30 located higher than the port 15 of the first form of lawnmower. The air inlet chamber 14 leads, as before, directly to the third air inlet 12g, but the second fan 28 also draws air from the air inlet chamber 14. The second fan 28 blows the second stream of air through the second air inlet 17 into the receptacle 12, and the second stream of air has the same configuration as that shown in Figures 1 to 3, in that a wall or curtain of air is formed in front of the rear wall 12f of the receptacle.

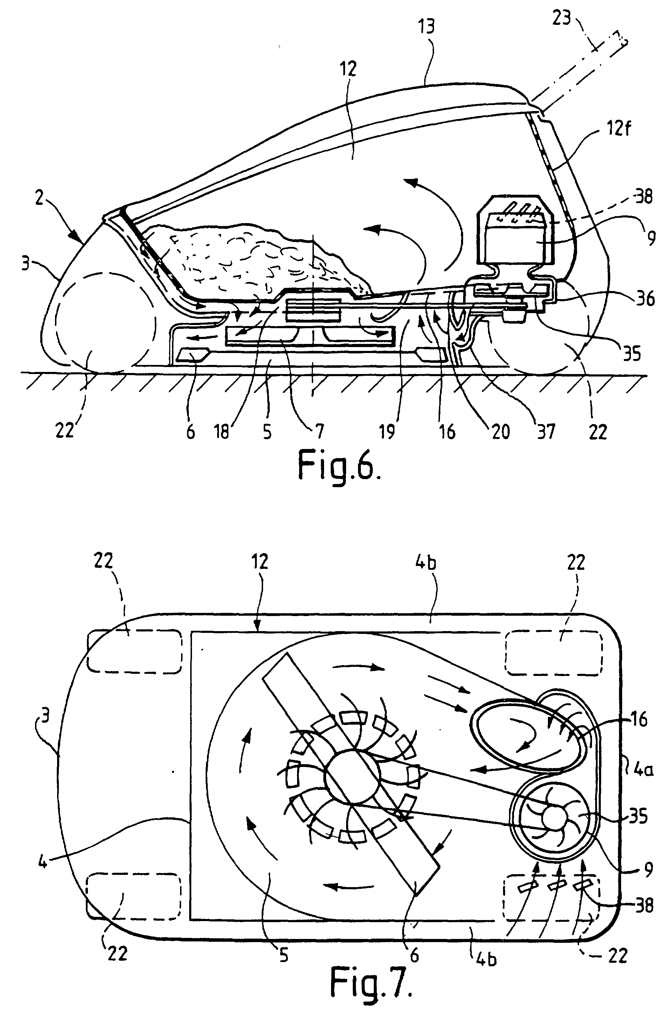

Figures 6 and 7 show a third form of lawnmower which operates on the same principle as the first two forms of lawnmower. Again like reference numerals are used for like parts and only the modifications will be described in detail. This lawnmower includes a receptacle 12 in the form of a basket, and the motor 9 is located at the rear of the mower

As in the earlier embodiments, in operation, the impeller 7 sucks air from the receptacle 12 via the plenum chamber 18, and the cutter blade 6 cuts the grass. The cut grass is transported through the passage 20 and into the receptacle 12 in a first air flow generated by the impeller 7 and the tips of the cutter blade 6

The motor 9 directly drives a second fan 35 housed in a fan casing 36, thereby generating a second stream of air which is directed through a duct 37 into the cutting chamber 5. Here, the second stream of air is directed through the passage 20 into the receptacle 12. The second stream of air is configured such that a wall or curtain of air is formed in front of the rear wall 12f of the receptacle 12. The second fan 35 draws air from atmosphere via slots 38 in the housing 2 such that the air passes over the motor 9, thereby cooling it, before passing through the second fan. It should be noted that, although the rear wall 12f of the receptacle 12 appears (in Figure 6) to be distant from the first inlet 16, much of the first inlet is obscured by the motor 9 and the fan 35. Figure 7, which is a sectional plan view of Figure 6, shows that the first inlet 16 is at the back of the receptacle 12, and next to the second fan 35.

It should also be appreciated that, in the third form of lawnmower, the second stream of air itself has some effect in entraining cut grass.

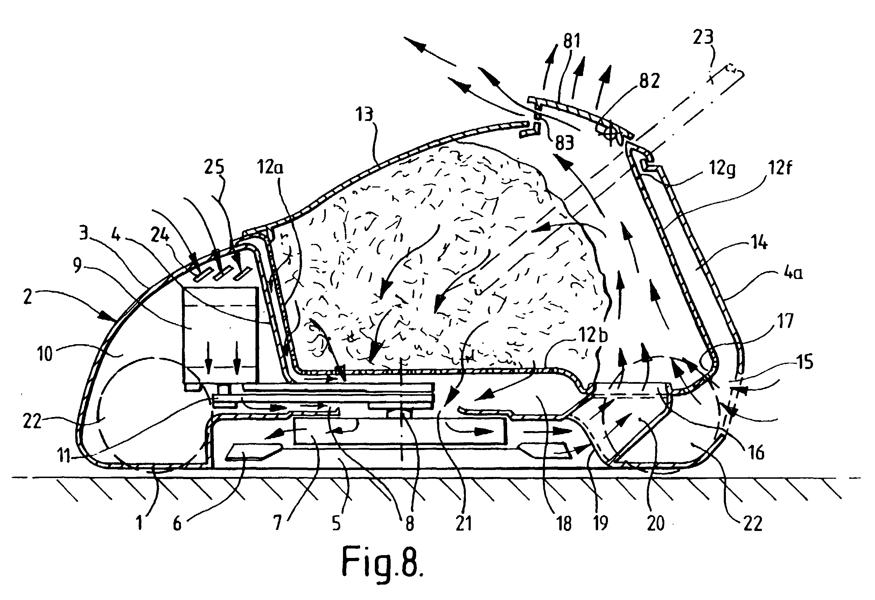

A modified form of the lawnmower of Figures 1 to 3 is shown in Figure 8. Like reference numerals are used for like parts, and only the modifications are described below. In the above description relating to Figures 1 to 3, it is mentioned that, once the receptacle 12 is nearly full, the air-permeable front, base and side walls 12a, 12b and 12c of the receptacle become restricted by collected grass.

During normal operation, the air impeller 7 creates a negative pressure within the receptacle 12. Thus, cut grass is drawn into the interior of the receptacle 12. However, once the receptacle 12 is almost full, typically more than 75% full, the air-permeable walls 12a, 12b and 12c of the receptacle will become mainly blocked by collected grass. At this point, the impeller 7 is still driving air and cut grass through the passage 20 into the receptacle 12, and a pressure inversion occurs. Thus, the pressure of the air within the receptacle 12 becomes positive. To release some of the positive pressure air, and to ensure that air continues to flow from the cutting chamber 5 through the passage 20 into the receptacle 12, a flap 81, which is located in the lid 13 of the machine, opens to release the positive pressure air through a grating 83. The flap 81 is connected to the lid 13 by a pivot 82. In addition to its function of releasing positive pressure air, the lifting of the flap 81 also acts as an indicator to the user of the machine that the receptacle 12 is nearly full. The flap 81 may be brightly coloured, so that the user notices the lifting of the flap more readily. The lifting of the flap 81 could also result in an audible indication that the receptacle 12 is nearly full. To achieve this, the grating 83 might incorporate a whistle or other device which is capable of making a noise as air passes through it. Thus, an indication is given to the user of the change of state of the receptacle 12.

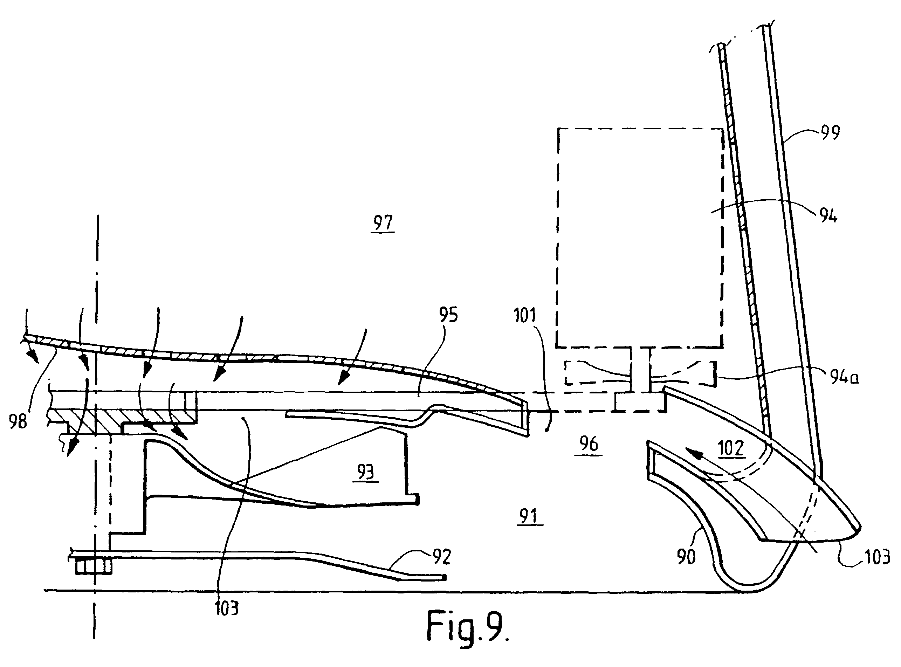

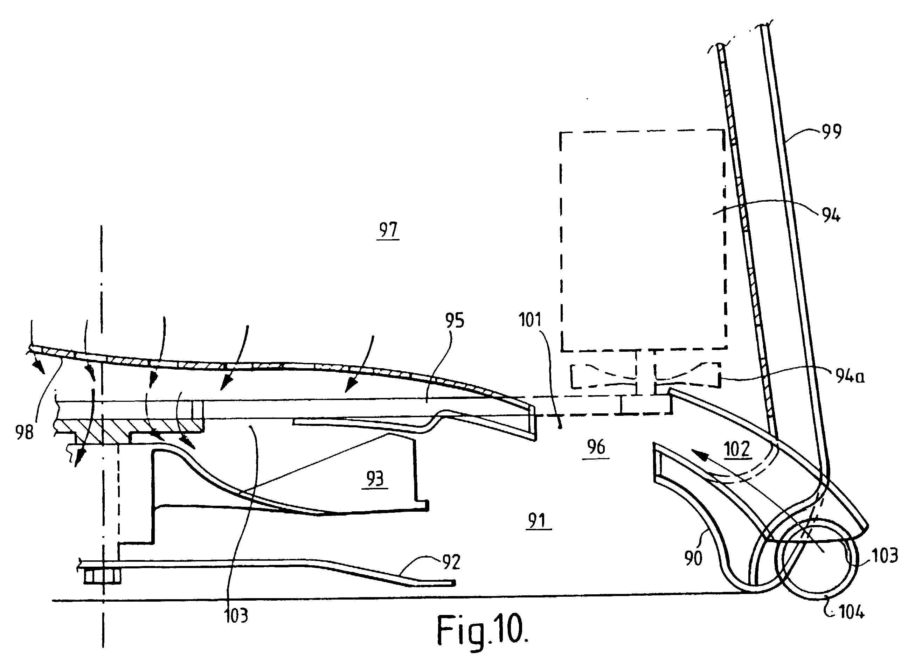

Referring now to Figures 9 and 10, part of two hover lawnmowers are shown in section, each lawnmower including a deck 90 defining a cutting chamber 91 in which a cutter blade 92 and an impeller 93 are rotatable about a vertical axis. The impeller 93 and the blade 92 are mounted so as to be rotatable together about the same axis. The blade 92 and the impeller 93 are driven by a motor 94 via a belt drive system 95. The motor 94 is mounted at the rear of the machine, when considered in the normal direction of use, and in addition to the blade 92 and the impeller 93, the motor drives a small impeller 94a which draws air over the motor for cooling.

The impeller 93 drives air into the cutting chamber 91 so as to create a cushion of high pressure air within the cutting chamber causing the lawnmower to hover just above the ground.

The deck 90 includes an aperture 96 disposed towards the rear of the lawnmower when considered in the normal direction of use. The aperture 96 opens into a grass collecting receptacle 97 which, in this case, includes an air-permeable basket 98 which fits inside an air-impermeable housing 99 such that there is a space between the outside of the basket 98 and the inside of the housing 99. The air-permeable basket 98 includes a first inlet 101 which corresponds in position to the aperture 96 in the deck 90. The top of the housing 99 is closed by an air-impermeable lid (not shown). An opening 100 in the deck 90 allows air between the receptacle 97 and the housing 99 to be drawn into the eye of the impeller 93 so as to feed the impeller with air.

A second air inlet 102 opens into the receptacle 97 in the region of the aperture 96. The second air inlet 102 is in the form of a tube defining a mouth 103 which is positioned outside of the machine and faces downwards. The second inlet 102 is positioned so as to direct air across the aperture 96.

It should be noted that, although the motor 94 is located in the position shown, it lies outside the receptacle 97, and is, therefore, shown in broken lines.

In operation, the impeller 93 draws air into the eye of the impeller from the receptacle 97 via the air permeable walls of the basket 98 and the opening 101. This means that the impeller 93 causes the receptacle 97 to be maintained at a low or negative pressure (i.e. less than ambient pressure). The impeller 93 drives the air into the cutting chamber 91 so as to generate hover to lift the machine just above the ground to enable it to be moved easily about a lawn. The cutter blade 92 rotates to cut the grass to the desired height. Cut grass (grass clippings) are mainly thrown outwardly and upwardly by the cutter blade 92 and impact against the inside of the deck 90. A proportion of the air generated by the impeller 93 passes through the aperture 96 into the receptacle 97. This occurs because the cutting chamber 91 is at a positive pressure, and the receptacle 97 is at a negative pressure. Much of the air directed into the cutting chamber 91 by the impeller 93 is lost beneath the deck 90 in generating the hover. The flow of air through the aperture 96 into the receptacle 97 carries some grass cuttings with it.

In view of the fact that the receptacle 97 is maintained at a negative pressure, ambient air is drawn into it via the second air inlet 102. The second inlet 102 is arranged so that the air drawn therethrough exits at high speed, and passes across the end of the aperture 96, thereby having a venturi effect on the aperture 96. The result of this venturi effect is that cut grass is lifted through the aperture 96 from the cutting chamber 91, and any clogging which would have occurred in the aperture 96 is prevented by the suction generated by the venturi effect. In addition, the high speed venturi air from the second air inlet 102 causes much of the grass cuttings to change direction, and to be blown into the furthest part of the receptacle 97. This means that the grass is less likely to fall back and block the aperture 96.

In addition, the air which is drawn into the receptacle 97 via the second air inlet 102 may be used to pick up any further debris from the ground just behind the lawnmower. The mouth 103 is directed downwardly, and so any grass clippings which have been left on the ground after the cutting chamber 91 has passed over them may be picked up by the air which enters the mower through the mouth.

Once the receptacle 97 has become full, the lid may be lifted about a pivot, and the basket 98 may be lifted out and emptied before being placed back in the machine. There are three important points to understand about this embodiment. Firstly, the impeller 93 must not only supply enough air to maintain a cushion of air, but also to supply air to the receptacle 97 via the aperture 96. Without the second air inlet 102, the impeller 93 would starve, because more air would be leaving the system beneath the deck 90 via the hover than would be recycled through the receptacle 97. It should be realised that the second air inlet 102 is there effectively to feed the impeller 93 with enough air. Secondly, the position of the second air inlet 102 is such that the venturi effect not only draws cut grass into the receptacle 97, but also keeps the aperture 96 clear. Thirdly, the venturi air also redirects the cut grass into the interior of the receptacle 97 furthest from the aperture 96.

Hitherto, extreme difficulty has been found by designers of hover type lawnmowers who wish to collect the cut grass from within the cutting chamber. In the past, attempts to collect from within the cutting chamber have resulted in loss of hover as a result of air escaping with the cut grass.

Figure 10 shows a hover lawnmower similar to that shown in Figure 9. It is modified by the addition of a support wheel or roller 104 at the rear, beneath the motor 94. Thus, the heavy motor 94 is supported by the wheel or roller 104.

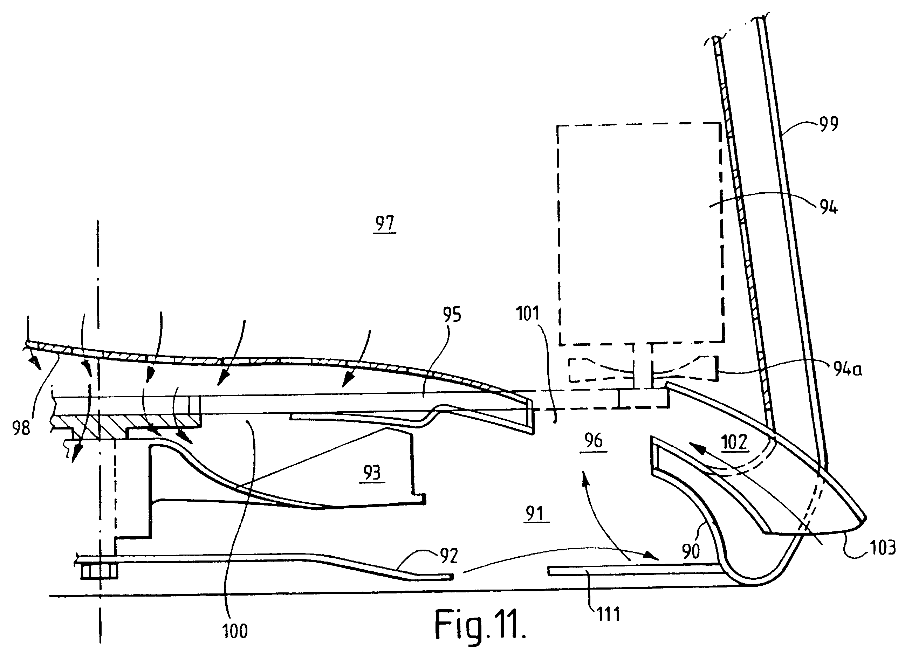

Figure 11 shows a modified version of the hover machine shown in Figure 9. A platform or shelf is positioned beneath the aperture 96 so that grass cuttings are thrown onto it by the cutter blade 92 before being lifted by the venturi.

The motor may be placed at the front of the machine rather than at the rear, if desired.

It will be apparent that other modifications could be made to the lawnmowers described above. For example, the passage 20 of each of the embodiments of Figure 1 to 8 may be difficult to mould in one piece with the deck 1. It may be, therefore, preferable to mould half the passage with the deck, and to mould the other half with the receptacle 12. An advantage of this is that, if the passage 20 becomes blocked with cut grass, removal of the receptacle 12 will open the passage, thereby facilitating removal of the blockage.

## Claims

1. A lawnmower comprising:
a deck (1) defining a cutting chamber (5), the deck (1) including an aperture (19) for passage of cut grass from the cutting chamber (5);
a cutter blade (6) rotatable within the cutting chamber (5) about a substantially vertical axis;
a grass collection receptacle (12) including a first air-permeable region and a first inlet (16) for entry of the cut grass from the cutting chamber (5); and
an air moving device (7) for drawing air from the grass collection receptacle (12) via the first air-permeable region, and for directing the so-drawn air into the cutting chamber (5), the resultant first air flow serving to entrain cut grass within the cutting chamber (5) and to convey said entrained grass into the grass collection receptacle (12) via the aperture (19) and the first inlet (16);
**characterised by** a second air inlet (17), which is disposed in the region of the first inlet (16), for entry of a second stream of air into the receptacle (12), the second stream of air serving to complement the first air flow through the receptacle (12), and to assist in deflecting the cut grass entrained in the first air flow into the interior of the receptacle (12).

2. A lawnmower according to claim 1, further comprising a passage (20) disposed between the aperture (19) in the deck (1) and the first inlet (16) in the receptacle (12).

3. A lawnmower according to claim 2, wherein part of the passage (20) is formed with the deck (1), the remaining part of the passage (20) being formed with the receptacle (12).

4. A lawnmower according to claim 2 or claim 3, wherein the second air inlet (17) opens into the passage (20) and directs the second stream of air into the receptacle (12) from the passage (20).

5. A lawnmower according to any one of claims 1 to 3, wherein the second air inlet (17) is formed in the receptacle (20).

6. A lawnmower according to any one of claims 1 to 5, wherein the second air inlet (17) serves to direct the second stream of air into the receptacle (12) in such a manner as to form a curtain or wall of air.

7. A lawnmower according to claim 6, wherein the receptacle (20) has an air-impermeable wall portion in the region in which the curtain or wall of air is formed.

8. A lawnmower according to any one of claims 1 to 7, further comprising a source of the second stream of air.

9. A lawnmower according to claim 8, wherein the source of the second stream of air includes an air pump (28).

10. A lawnmower according to claim 8, wherein the source of the second stream of air is constituted by the air moving device (7).

11. A lawnmower according to any one of claims 1 to 10, wherein the second air inlet (17) leads ambient air into the receptacle (12).

12. A lawnmower according to any one of claims 1 to 11, wherein the receptacle (12) includes a third air inlet (12g) for entry of a third stream of air into the receptacle (12) for complementing the first and second air flows, the third air inlet (12g) being disposed towards the top of the receptacle (12).

13. A lawnmower according to any one of claims 1 to 12, further comprising a housing for receiving the receptacle.

14. A lawnmower according to claim 13 as dependent upon claim 12, wherein the third air inlet (12g) is spaced apart from the housing to define an air inlet chamber (14) leading to a third air inlet (12g).

15. A lawnmower according to claim 13, or claim 14, wherein the second air inlet (17) is spaced apart from the housing in such a manner as to lead the second stream of air to the second air inlet (17).

16. A lawnmower according to any one of claims 13 to 15, wherein the housing includes a port (15) leading to atmosphere.

17. A lawnmower according to any one of claims 13 to 16, wherein the housing airtightly surrounds the receptacle (12), sealing it from atmosphere.

18. A lawnmower according to claim 17, wherein the housing includes means for venting positive pressure air to atmosphere.

19. A lawnmower according to claim 18, wherein the venting means is a flap (81) pivoted to the housing.

20. A lawnmower according to claim 18 or 19, wherein the venting means includes an audible or visible indicator for indicating that the receptacle is substantially full.

21. A lawnmower according to any one of claims 18 to 20, wherein the housing includes an air-impermeable lid (13), and the venting means is mounted in the lid (13).

22. A lawnmower according to any one of claims 1 to 21, further comprising wheels (22) for supporting the deck (1) above the ground.

23. A lawnmower as claimed in claim 22, wherein there are four wheels (22) positioned respectively at the four "corners" of the deck (1), and wherein the receptacle (12) is positioned above the deck (1) substantially within the footprint of the wheels (22).

24. A lawnmower according to any one of claims 1 to 23, wherein the cutting chamber (5) also forms a chamber for retaining air under pressure to support the mower by hovering.

25. A lawnmower according to any one of the preceding claims, wherein the second air inlet (17) is arranged to direct the second stream of air across the face of the first inlet (16).

26. A lawnmower according to claim 25, wherein the second stream of air is ambient air drawn into the machine from the region of the ground.

27. A lawnmower according to any one of claims 24 to 26, further comprising a platform (111) disposed within the cutting chamber (5) on which platform cut grass is deposited prior to being drawn through the aperture (19).

28. A lawnmower according to any one of preceding claims, including a motor (9), located at the rear of the machine.

29. A lawnmower grass collection receptacle (12) arranged to be located within a body of the lawnmower and comprising:
an air-permeable region through which air is drawn;
a first inlet (16) for entry of a first flow of air laden with cut grass;
a second inlet (17), which is disposed adjacent to the first inlet, for entry of a second stream of air into the receptacle (12), the second stream of air serving to complement the primary air flow through the receptacle, and to assist in deflecting the cut grass entrained in the first air flow into the interior of the receptacle (12); and
a third air inlet (12g) for entry of a third stream of air into the receptacle, the third air inlet being disposed towards the top of the receptacle.

30. A receptacle according to claim 29, including an air impermeable wall, the third air inlet being disposed towards the top of that wall.

## Patentansprüche

1. Rasenmäher mit:
einem Bodenteil (1), das eine Schneidkammer (5) definiert, wobei das Bodenteil (1) eine Öffnung (19) zum Durchgang von geschnittenem Gras aus der Schneidkammer (5) aufweist; eine Schneidklinge (6), die innerhalb der Schneidkammer (5) um eine im wesentlichen vertikale Achse drehbar ist;
einen Grassammelbehälter (12), der einen ersten luftdurchlässigen Bereich und einen ersten Einlass (16) aufweist, der zum Eintritt des geschnittenen Grases aus der Schneidkammer (5) vorgesehen ist; und
eine Luftbewegungsvorrichtung (7), die zum Abziehen von Luft aus dem Grassammelbehälter (12) über den ersten luftdurchlässigen Bereich und zum Lenken der so abgezogenen Luft in die Schneidkammer (5) vorgesehen ist, wobei der sich ergebende erste Luftstrom dazu dient, geschnittenes Gras in die Schneidkammer (5) mitzureißen und das so mitgerissene Gras über die Öffnung (19) und den ersten Einlass (16) in den Grassammelbehälter (12) zu befördern;
**gekennzeichnet durch** einen zweiten Lufteinlass (17), der im Bereich des ersten Einlasses (16) zum Eintritt eines zweiten Luftstroms in den Behälter (12) angeordnet ist, wobei der zweite Luftstrom dazu dient, den ersten Luftstrom **durch** den Behälter (12) zu ergänzen und das Ablenken des im ersten Luftstrom in das Innere des Behälters (12) mitgerissenen Grases zu unterstützen.

2. Rasenmäher nach Anspruch 1, weiterhin mit einem Kanal (20), der zwischen der Öffnung (19) und dem Bodenteil (1) und dem ersten Einlass (16) im Behälter (12) angeordnet ist.

3. Rasenmäher nach Anspruch 2, bei dem ein Teil des Kanals (20) mit dem Bodenteil (1) ausgebildet ist, wobei der verbleibende Teil des Kanals (20) mit dem Behälter (12) ausgebildet ist.

4. Rasenmäher nach Anspruch 2 oder Anspruch 3, bei dem der zweite Lufteinlass (17) sich in den Kanal (20) öffnet und den zweiten Luftstrom aus dem Kanal (20) in den Behälter (12) leitet.

5. Rasenmäher nach einem der Ansprüche 1 bis 3, bei dem der zweite Einlass (17) im Behälter (20) ausgebildet ist.

6. Rasenmäher nach einem der Ansprüche 1 bis 5, bei dem der zweite Einlass (17) zum Leiten des zweiten Luftstroms in den Behälter (12) in einer derartigen Weise dient, dass er einen Luftvorhang oder eine Luftwand bildet.

7. Rasenmäher nach Anspruch 6, bei dem der Behälter (20) einen luftundurchlässigen Wandabschnitt in dem Bereich aufweist, in dem der Luftvorhang oder die Luftwand gebildet wird.

8. Rasenmäher nach einem der Ansprüche 1 bis 7, weiterhin mit einer Quelle des zweiten Luftstroms.

9. Rasenmäher nach Anspruch 8, bei dem die Quelle des zweiten Luftstroms eine Luftpumpe (28) aufweist.

10. Rasenmäher nach Anspruch 8, bei dem die Quelle des zweiten Luftstroms durch die Luftbewegungsvorrichtung (7) gebildet ist.

11. Rasenmäher nach einem der Ansprüche 1 bis 10, bei dem der zweite Lufteinlass (17) Umgebungsluft in den Behälter (12) führt.

12. Rasenmäher nach einem der Ansprüche 1 bis 11, bei dem der Behälter (12) einen dritten Lufteinlass (12g) aufweist, der zum Eintritt eines dritten Luftstroms in den Behälter (12) und zum Ergänzen der ersten und zweiten Luftströme vorgesehen ist, wobei der dritte Lufteinlass (12g) in Richtung des oberen Teils des Behälters (12) angeordnet ist.

13. Rasenmäher nach einem der Ansprüche 1 bis 12, der weiterhin ein Gehäuse zur Aufnahme des Behälters aufweist.

14. Rasenmäher nach Anspruch 12 und 13, bei dem der dritte Lufteinlass (12g) derart vom Gehäuse beabstandet ist, dass eine Lufteinlasskammer (14) definiert ist, die zu einem dritten Lufteinlass (12g) führt.

15. Rasenmäher nach Anspruch 13 oder 14, bei dem der zweite Lufteinlass (17) vom Gehäuse in einer derartigen Weise beabstandet ist, dass er den zweiten Luftstrom zum zweiten Lufteinlass (17) führt.

16. Rasenmäher nach einem der Ansprüche 13 bis 15, bei dem das Gehäuse einen Durchlass (15) einschließt, der zur Atmosphäre führt.

17. Rasenmäher nach einem der Ansprüche 13 bis 16, bei dem das Gehäuse den Behälter (12) luftdicht umgibt, wodurch dieser von der Atmosphäre abgedichtet ist.

18. Rasenmäher nach Anspruch 17, bei dem das Gehäuse eine Einrichtung zum Entlüften positiver Druckluft zur Atmosphäre aufweist.

19. Rasenmäher nach Anspruch 18, bei dem die Entlüftungseinrichtung eine Verschlussklappe (81) ist, die schwenkbar am Gehäuse angebracht ist.

20. Rasenmäher nach Anspruch 18 oder 19, bei dem die Entlüftungseinrichtung einen hörbaren oder sichtbaren Indikator zum Anzeigen einschließt, dass der Behälter im wesentlichen voll ist.

21. Rasenmäher nach einem der Ansprüche 18 bis 20, bei dem das Gehäuse einen luftundurchlässigen Deckel (13) einschließt und bei dem die Belüftungseinrichtung in dem Deckel (13) angebracht ist.

22. Rasenmäher nach einem der Ansprüche 1 bis 21, der weiterhin Räder (22) zum Lagern des Bodenteils (1) über dem Boden aufweist.

23. Rasenmäher nach Anspruch 22, bei dem vier Räder (22) jeweils an den vier "Ecken" des Bodenteils (1) angeordnet sind und bei dem der Behälter (12) über dem Bodenteil (1) im wesentlichen innerhalb der Aufstandsfläche der Räder (22) angeordnet ist.

24. Rasenmäher nach einem der Ansprüche 1 bis 23, bei dem die Schneidkammer (5) weiterhin eine Kammer zum derartigen Halten der Luft unter Druck bildet, dass der Mäher durch Luftkissenbildung gelagert ist.

25. Rasenmäher nach einem der vorhergehenden Ansprüche, bei dem der zweite Lufteinlass (17) so angeordnet ist, dass er den zweiten Luftstrom über die Fläche des ersten Einlasses (16) leitet.

26. Rasenmäher nach Anspruch 25, bei dem der zweite Luftstrom Umgebungsluft ist, die aus dem Bereich des Bodens in die Maschine gezogen wird.

27. Rasenmäher nach einem der Ansprüche 24 bis 26, der weiterhin eine Plattform (111) umfasst, die innerhalb der Schneidkammer (5) angeordnet ist, wobei auf der Plattform geschnittenes Gras abgelagert wird, bevor es durch die Öffnung (19) gezogen wird.

28. Rasenmäher nach einem der vorhergehenden Ansprüche, der einen Motor (9) aufweist, der sich am hinteren Teil der Maschine befindet.

29. Grassammelbehälter für einen Rasenmäher (12), der so angeordnet ist, dass er sich innerhalb des Rasenmäherkörpers befindet und folgendes aufweist:
einen luftdurchlässigen Bereich, durch den Luft eingezogen wird;
einen ersten Einlass (16), der zum Eintritt eines ersten Luftstroms vorgesehen ist, der mit geschnittenem Gras beladen ist;
einen zweiten Einlass (17), der neben dem ersten Einlass angeordnet ist, und der zum Eintritt eines zweites Luftstroms in den Behälter (12) vorgesehen ist, wobei der zweite Luftstrom dazu dient, den ersten Luftstrom durch den Behälter zu ergänzen und das Ableiten des im ersten Luftstrom in das Innere des Behälters (12) mitgerissenen geschnittenen Grases zu unterstützen; und
einen dritten Lufteinlass (12g), der zum Eintritt eines dritten Luftstroms in den Behälter vorgesehen ist, wobei der dritte Lufteinlass in Richtung zum oberen Teil des Behälters hin angeordnet ist.

30. Behälter nach Anspruch 29, mit einer luftundurchlässigen Wand, wobei der dritte Lufteinlass in Richtung zum oberen Teil dieser Wand hin angeordnet ist.

## Revendications

1. Tondeuse à gazon comprenant :
un châssis (1) qui définit une chambre de coupe (5) , le châssis (1) comportant une ouverture (19) pour le passage de l'herbe coupée venant de la chambre de coupe (5) ;
une lame de coupe (6) qui peut tourner à l'intérieur de la chambre de coupe (5) autour d'un axe sensiblement vertical ;
un réceptacle de collecte d'herbe (12) incluant une première région perméable à l'air et une première entrée (26) pour l'entrée de l'herbe coupée venant de la chambre de coupe (5) ; et
un dispositif de déplacement d'air (7) pour aspirer de l'air venant du réceptacle de collecte d'herbe (12) via la première région perméable à l'air, et pour diriger l'air ainsi aspiré vers la chambre de coupe (5), le premier flux d'air résultant servant à entraîner l'herbe coupée à l'intérieur de la chambre de coupe (5) et à transporter la dite herbe entraînée vers le réceptacle de collecte d'herbe (12) via l'ouverture (19) et la première entrée (16) ;
**caractérisée par** une deuxième entrée d'air (17), qui est disposée dans la région de la première entrée (16) pour l'entrée d'un deuxième flux d'air dans le réceptacle (12), le deuxième flux d'air servant à renforcer le premier flux d'air à travers le réceptacle (12) et à aider à la déviation de l'herbe coupée, entraînée dans le premier flux d'air, vers l'intérieur du réceptacle (12).

2. Tondeuse selon la revendication 1, comprenant en outre un passage (20) disposé entre l'ouverture (19) du châssis. (1) et la première entrée (16) du réceptacle (12).

3. Tondeuse selon la revendication 2, dans laquelle une partie du passage (20) est formée avec le châssis (1), la partie restante du passage (20) étant formée avec le réceptacle (12).

4. Tondeuse selon la revendication 2 ou la revendication 3, dans laquelle la deuxième entrée d'air (17) débouche dans le passage (20) et dirige le deuxième flux d'air vers le réceptacle (12) à partir du passage (20).

5. Tondeuse selon une quelconque des revendications 1 à 3, dans laquelle la deuxième entrée d'air (17) est formée dans le réceptacle (20).

6. Tondeuse selon une quelconque des revendications 1 à 5, dans laquelle la deuxième entrée d'air (17) sert à diriger le deuxième flux d'air vers le réceptacle (12) de manière à créer un rideau ou une cloison d'air.

7. Tondeuse selon la revendication 6, dans laquelle le réceptacle (20) comporte une partie de paroi imperméable à l'air dans la région dans laquelle est formé le rideau ou la cloison d'air.

8. Tondeuse selon une quelconque des revendications 1 à 7, comprenant en outre une source du deuxième flux d'air.

9. Tondeuse selon la revendication 8, dans laquelle la source du deuxième flux d'air comprend une pompe à air (28).

10. Tondeuse selon la revendication 8, dans laquelle la source du deuxième flux d'air est constituée par le dispositif de déplacement d'air (7).

11. Tondeuse selon une quelconque des revendications 1 à 20, dans laquelle la deuxième entrée d'air (17) introduit de l'air ambiant dans le réceptacle (12).

12. Tondeuse selon une quelconque des revendications 1 à 11, dans laquelle le réceptacle (12) comporte une troisième entrée d'air (12g) pour l'introduction d'un troisième flux d'air dans le réceptacle (12) afin de renforcer les premier et deuxième flux d'air, la troisième entrée d'air (12g) étant disposée vers le sommet du réceptacle (12).

13. Tondeuse selon une quelconque des revendications 1 à 12, comprenant en outre un carter pour recevoir le réceptacle.

14. Tondeuse selon la revendication 13, lorsqu'elle dépend de la revendication 12, dans laquelle la troisième entrée d'air (12g) est espacée du carter pour définir une chambre d'entrée d'air (14) conduisant à une troisième entrée d'air (12g).

15. Tondeuse selon la revendication 13 ou la revendication 14, dans laquelle la deuxième entrée d'air (17) est espacée du carter de manière à diriger le deuxième flux d'air vers la deuxième entrée d'air (17).

16. Tondeuse selon une quelconque des revendications 13 à 15, dans laquelle le carter comporte une ouverture (15) conduisant à l'atmosphère.

17. Tondeuse selon une quelconque des revendications 13 à 16, dans laquelle le carter entoure de façon étanche à l'air le réceptacle (12), de façon à l'isoler de l'atmosphère.

18. Tondeuse selon la revendication 17, dans laquelle le carter comporte un moyen d'évacuation de l'air sous pression positive à l'atmosphère.

19. Tondeuse selon la revendication 18, dans laquelle le moyen d'évacuation est un clapet à battant (81) qui pivote sur le carter.

20. Tondeuse selon la revendication 18 ou 19, dans laquelle le moyen d'évacuation comprend un indicateur audible ou visible pour indiquer que le réceptacle est sensiblement plein.

21. Tondeuse selon une quelconque des revendications 18 à 20, dans laquelle le carter comprend un couvercle imperméable à l'air (13), et le moyen d'évacuation est monté dans le couvercle (13).

22. Tondeuse selon une quelconque des revendications 1 à 21, comprenant en outre des roues (22) pour supporter le châssis (1) au-dessus du sol.

23. Tondeuse selon la revendication 22, dans laquelle il y a quatre roues (22) placées respectivement aux quatre "angles" du châssis (1), et dans laquelle le réceptacle (12) est placé au-dessus du châssis (1) sensiblement à l'intérieur de l'empreinte des roues (22).

24. Tondeuse selon une quelconque des revendications 1 à 23, dans laquelle la chambre de coupe (5) forme également une chambre de retenue d'air sous pression pour supporter la tondeuse par sustentation à coussin d'air.

25. Tondeuse selon une quelconque des revendications précédentes, dans laquelle la deuxième entrée d'air (17) est agencée de manière à diriger le deuxième flux d'air en travers de la face de la première entrée (16).

26. Tondeuse selon la revendication 25, dans laquelle le deuxième flux d'air est de l'air ambiant aspiré dans la machine à partir de la région du sol.

27. Tondeuse selon une quelconque des revendications 24 à 26, comprenant en outre une plate-forme (111) disposée à l'intérieur de la chambre de coupe (5), l'herbe coupée étant déposée sur cette plate-forme avant d'être aspirée à travers l'ouverture (19).

28. Tondeuse selon une quelconque des revendications précédentes, incluant un moteur (9) placé à l'arrière de la machine.

29. Réceptacle de collecte d'herbe (12) pour tondeuse, prévu pour être placé à l'intérieur d'un corps de la tondeuse et comprenant:
une région perméable à l'air à travers laquelle de l'air est aspiré ;
une première entrée (16) pour l'entrée d'un premier flux d'air chargé d'herbe coupée ;
une deuxième entrée (17), qui est adjacente à la première entrée, pour l'entrée d'un deuxième flux d'air dans le réceptacle (12), le deuxième flux d'air servant à renforcer le flux d'air primaire à travers le réceptacle, et à aider à dévier l'herbe coupée entraînée dans le premier flux d'air vers l'intérieur du réceptacle (12); et
une troisième entrée d'air (12g) pour entrée d'un troisième flux d'air dans le réceptacle, la troisième entrée d'air étant disposée vers le sommet du réceptacle.

30. Réceptacle selon la revendication 29, incluant une paroi imperméable à l'air, la troisième entrée d'air étant disposée vers le sommet de cette paroi.
